# EUROPEAN PATENT APPLICATION

(11) **EP 4 280 514 A1**
(43) Date of publication of application: **22.11.2023**
(21) Application number: 22174447.7
(22) Date of filing: 19.05.2022
(51) Int. Cl.: H04L 5/00, H04L 27/00, H04W 16/14, H04W 48/20, H04W 72/00, H04W 76/00, H04W 84/00

(54) **SIDELINK ESTABLISHMENT IN ALTERNATIVE RANGE OF FREQUENCY**

(71) Applicant: Telit Cinterion Deutschland GmbH, 81541 München (DE)
(72) Inventor: BREUER, Volker, 16727 BOETZOW (DE); WEIHMEIER, Lars, 14612 FALKENSEE (DE)
(74) Representative: Pearl Cohen Zedek Latzer Baratz UK LLP

(57) **Abstract**

The present invention relates to a method, in a context of New Radio Link carrier aggregation, to establish a sidelink for a first user device having an air interface with a first base station acting in a first range of frequency and being adapted to establish sidelink in a second range of frequency, different from the first range of frequency, said first base station having at least a connection link with a second base station adapted to act in the second range of frequency,
said method comprising, for the first user device:
- receiving an indication on the possibility to establish a sidelink in the second range of frequency with a second user device being available to provide a sidelink in the second range of frequency while besides connecting to the second base station,
- establish a sidelink with the second user device in the second range of frequency,
- processing, using aggregation, flow of data on the air interface with the first base station in the first range of frequency and flow of data on the sidelink with the second user device in the second range of frequency.

## Description

### FIELD OF THE INVENTION

The present invention relates to methods, in a context of New Radio carrier aggregation, to establish a sidelink for a first user device having an air interface with a first base station acting in a first range of frequency.

The invention also pertains to user devices and to a base station implementing said method.

### BACKGROUND OF THE INVENTION

Release 18 has richer environments and use cases. Sidelink usage is thus to be enhanced to address interesting scenarios.

Release 17 defined the NR sidelink for increasing coverage area, i.e. for user device UE being out of coverage. It means that a UE being connected to NR in a first range of frequency, typically FR1, and leaving NR coverage area may still be served by the NR base station by serving said UE via sidelink from a UE being still in NR coverage.

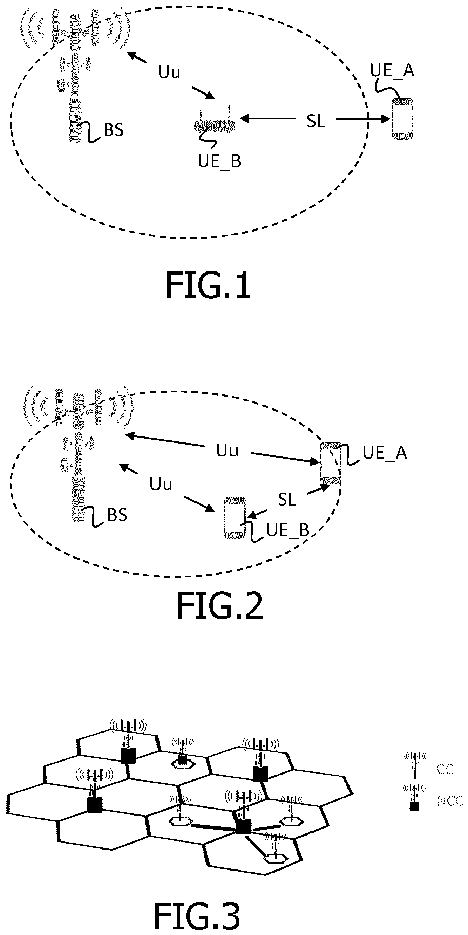

This is illustrated in figure 1 showing the use of a sidelink to increase coverage in Release 17. On this figure a base station BS presents a coverage illustrated with a dashed oval circle. The base station BS is connected to a user device UE_A, which is out of coverage of the base station BS. This connection is done via a sidelink SL between the UE_A and an intermediate user device UE_B. Said intermediate UE_B is besides connected to the base station BS via an UMTS air interface which is referenced as a Uu link in the standard and thus in the following. Such interface links UE_B to the UMTS Terrestrial Radio Access Network. Said scenario is in Release 17 restricted to FR1 licensed spectrum NR use case only.

In a first step, 3GPP will extend sidelink usage to FR2 in context of Release 18. Release 18 has a corresponding objective to increase sidelink usage and also to combine sidelink and Uu usage. This is illustrated on figure 2, which discloses the targeted situation in Release 18.

Here a base station BS combines in FR1 a direct Uu connection with a UE_A and a sidelink SL via a second UE_B involving link to a new carrier aggregation CA form, to increase throughput. It remains open whether both links need to be terminated with the same base station BS. Both connections are here to be handled in same frequency range FR1.

3GPP will first address sidelink operation within FR1 as carrier aggregation.

On top of the limited functionality being defined in Release 17 for sidelink, sidelink needs to be extended for FR2 and also unlicensed spectrum. However, when UE performs sidelink mode 1 (or mode 3), i.e. being under network control for D2D/V2X, said control is managed by the network in FR1. So even when setting up an independent sidelink in FR2 for content/data transfer, giving that coverage in FR2 of the cells is very small, the network supervised mode is not really considered.

No solution is currently available in the various encountered situation where FR2 can be involved.

However a network supported method would be beneficial compared to the current FR2 standalone considering range extension of FR2 by sidelink for offloading and increasing data throughput. This is especially the case for users being served by a FR1 base station outside reach of FR2 to offload said traffic from the coverage ensuring base station in FR1.

An FR1/FR2 combination including sidelink has challenges related to identification for sidelink UE and beam management. Especially when doing sidelink involving LTE new signaling challenges may arrive. However it is fact that most networks are 5G NSA networks.

So this invention intends to address aspects which are coming into next 3GPP Releases. More precisely it then refers to RP-213678 - New WI: Further enhancements for NR sidelink.

New Radio, when being deployed alongside with LTE or NR in FR2, has far lower coverage, as the technology being deployed in FR1, i.e. 700MHz to 7GHz, compared to NR being deployed in FR2 i.e. above 24.GHz. It is illustrated in figure 3. An FR1 underlay with an FR2 overlay of NR is shown. The base stations serving FR2 can be co-located to the base station serving FR1 or can be placed at separate locations. This has no direct relation to the subject of the invention except that for combined activities involving both base stations, co-located stations have the advantage of being in proximity. They may even be located in the same base station cabinet, except separate antenna front ends.

The cells that are active in FR2 are of small coverage and represented by the small hexagons while the ones active in FR1 are of larger coverage and represented by the large hexagons. Figure 3 thus shows LTE or NR coverage environment with small cells 5G NR in FR2. Small FR2 5G NR cells add ultrahigh speed in hot spots. This environment is an environment that specifically benefits from the invention.

In co-located cells, due to increasing attenuation with increasing frequency, attenuation is just higher and hence coverage at the higher frequency is of smaller area. This typical deployment scenario shows how important the work related to coverage extension for hot-spot coverage is.

So far, a UE being in LTE/NR coverage but outside of NR FR2 coverage has so far only the possibility to make use of the maximum throughput provided by LTE or NR in the frequency range FR1. The often used FR1 frequencies of 850/900MHz or 1800/1900, 2GHz even up to 2.5GHZ are defined for NR and LTE. Due to being based on same technical basics (OFDM, 20MHz BW...) in said range, the achievable throughput stays the same for both technologies. In 3,5GHz range only defined for NR in FR1, the throughput is higher but still small compared to achievable throughput in FR2 due to its enormous available bandwidth. However, the coverage area of FR2 is small as can be seen on figure 3. Thus only a UE being in such an FR2 small coverage area can benefit from said throughput increase. Giving the interest in offloading high throughput users from FR1 to FR2 hotspots there is a general interest to support any kind of establishment of such a sidelink in FR2, even though this is today not defined. As described above, it can however be supposed that interest to this scenario will arise. Indeed, when a device has never been in reach of any of the hotspots, it could however be interested to make use of said throughput capability of FR2. No dedicated mechanism in concerned cells or in user device is currently available to establish such link.

Further alternative and advantageous solutions would, accordingly, be desirable in the art.

### SUMMARY OF THE INVENTION

The present invention aims at enabling a sidelink establishment to enhance the use of communication resources.

The present invention is defined, in its broadest sense, as a method, in a context of New Radio Link carrier aggregation, to establish a sidelink for a first user device having an air interface with a first base station acting in a first range of frequency and being adapted to establish sidelink in a second range of frequency, different from the first range of frequency, said first base station having at least a connection link with a second base station adapted to act in the second range of frequency,
said method comprising, for the first user device:
- receiving an indication on the possibility to establish a sidelink in the second range of frequency with a second user device being available to provide a sidelink in the second range of frequency while besides connecting to the second base station,
- establish a sidelink with the second user device in the second range of frequency,
- processing, using aggregation, flow of data on the air interface with the first base station in the first range of frequency and flow of data on the sidelink with the second user device in the second range of frequency.

The invention avoids a user device, when it would have left NR FR2 coverage area, to try to find autonomously a UE being still in NR FR2 coverage and hence use NR sidelink for range extension and NR throughput while no support via its FR1 serving base station is provided. Signaling is provided to support the establishment of the sidelink in a second range of frequency.

The invention thus proposes a sidelink establishment in alternative range of frequency in new radio Carrier Aggregation (CA) context. Flow of data on the air interface and on the sidelink are received at the user device and these flows of data are processed by aggregation. It is here noted that an additional sidelink in the first range of frequency is not precluded. Such data on such a sidelink in the first range of frequency would be further processed by aggregation.

Here, it is noted that network supported means signaling support for sidelink setup/identification and not beam/link management. Signaling support in that sense means how a UE being in FR1 coverage only can identify another UE in proximity which is also in coverage of an FR2 base station via UU interface.

It also address any situation where one NR base station is deployed in FR1 and another NR base station is deployed in FR2 in the area. The invention has in general a purpose to define a support of EN-DC for enhanced dual connectivity, where one link is containing a sidelink.

So the invention addresses cross-FR sidelink signaling support for setup, which is also time critical as FR2 link/sidelink may be lost soon especially in moving propagation scenarios, so any network support is welcomed. To really make use of said additional throughput, a sidelink to said identified UE in FR2 may be setup and hence also make use on increased sidelink throughput by FR2 frequency being base station supervised by the FR2 serving base station.

The invention combines carrier aggregation CA in a first range of frequency, for example FR1 as defined in the standard, and a sidelink in a second range of frequency, for example FR2 as defined in the standard, as such. It leads to a cross-frequency air interface with a sidelink scenario.

Without the signaling according to the invention, how can a first user device in a first range of frequency whether it has a sidelink momentarily in the first range of frequency to a certain second user device in proximity or not reliably know whether said second user device would be able to build up an air interface connection in second range of frequency to a base station.

According to specific feature, the first range of frequency is the FR1 range as defined in New Radio.

According to another feature, the second range of frequency is a range of frequency outside the FR1 range as defined in New Radio. This is advantageously the FR2 range as defined in New Radio.

The use case scenarios of the invention thus enable typically high throughput in small FR2 cells to help in case of capacity shortage in FR1. The invention thus proposes an assisted and EN-Dual Connectivity (EN-DC) supervised sidelink usage for NR throughput increase and FR1 offloading.

Solving these scenarios by doing cross-frequency range EN-DC involving sidelink is a complex but interesting evolution. The invention proposes such an establishment according to a specific mechanism.

The invention enlarges sidelink usage to extend coverage with secondary or additional context in different frequency range of the sidelink. In a specific application using the FR1 and FR2 ranges of frequency as defined in the standard, it originally combines air interface Uu in FR1 with sidelink and air interface Uu in FR2.

According to another feature, the first range of frequency is of licensed band and the second range of frequency is of unlicensed band.

According to a first implementation, the indication is received in the information signaled by the first base station.

This implementation enables the first base station to stipulate the establishment of the sidelink establishment in another range of frequency than the one on which the link with the first user device is effective. It is here noted that the base station is not necessarily involved directly into the sidelink setup. Hence the base station may just stipulate or support the sidelink setup.

According to a second implementation, the two user devices having a previously established sidelink in the first range of frequency, the indication is received via this sidelink in the first range of frequency.

This implementation enables to further enhance the support offered by the second user device in terms of sidelinks. Two sidelinks in two different ranges of frequency can then be established according to the invention.

The invention also relates to a user device implementing the method as above exposed.

The invention also relates to a method, in a context of New Radio carrier aggregation, to establish a sidelink with a first user device having an air interface with a first base station acting in a first range of frequency, said method comprising, for the first base station:
- analyzing neighbor cell measurements received from the first and at least another second user device,
- in the case the second user device is in coverage of a second base station acting in a second range of frequency, different from the first range of frequency, said second base station having a connection link with the first base station, evaluating the distance between the two user devices,
- in the case the distance between the two user devices is within the range of a sidelink in said second range of frequency:
- sending an indication to the first user device on the possibility to establish a sidelink in the second range of frequency with the second user device,
- sending, to the second user device, an indication on the possibility to establish a sidelink in second range of frequency with the first user device and to establish an air interface in second range of frequency with the second base station,
- in case the sidelink in second range of frequency is established, receiving an indication on the establishment of this sidelink,
- in case of reception of such an indication, processing, using aggregation, flow of data on the air interface with the first base station in the first range of frequency and flow of data on connection link with the second base station, said flow of data on connection link comprising data from the first user device via the air interface of the second user device with the second base station and the sidelink of the first user device with the second user device in the second range of frequency.

This consists in an enhanced support from first base station. The aggregation processing occurs in case of reception of the indication of the establishment of a sidelink in second range of frequency.

The invention thus efficiently supports the UE setup to support scenarios making use of a primary link via LTE/NR Uu interface and secondary link via sidelink to an UE in proximity being in NR coverage.

Typically, the detailed network support enables, by specific signaling exchange, a user device being in FR1 coverage only, to setup efficiently a sidelink for reaching a UE being in FR2 coverage. The indication for the establishment of the sidelink may be received from either one of the devices or from the second base station BS2.

Furthermore it is here noted that the network using the first range of frequency is rather to ensure the coverage of the area than realizing extreme throughputs for individual user devices. Hence the LTE/NR network has an interest in connecting a device with high throughput to an FR2 hotspot via sidelink. The invention enables to give the user device indication for it to perform the establishment of sidelink.

According to an advantageous feature, the step of evaluating the distance between the two user devices uses any combinations of the parameters hereafter:
- cell identifier ,
- reported beam identifier,
- reported strongest beam of a cell,
- set of reported beams of a cell above a certain threshold,
- angle of arrival of received signal from user device,
- timing advance used for communication with each device.

The evaluation of distances between user devices is thus performed using known parameters of the connection of the user devices. It is here reminded that a base station can consist of one or more cells and that a cell is made of a plurality of beams. The beam structure is particularly and originally used in order to evaluate the distances and to evaluate a quality expected for a sidelink to be established.

Advantageously, the steps of analyzing neighbor cell measurements and of evaluating distances being performed for a bunch of local user devices, the method includes the step of determining at least one best second user device with which to setup a sidelink in the second range of frequency for achieving a connection using said sidelink and an air interface of this second user device in the second range of frequency for the first user device.

With this feature, the network may supervise a search for specific device for sidelink setup, i.e. the ones which are in coverage of FR2. It evaluates most suitable second user device by considering potential capabilities of the SL established in FR2 and the UU interface of said device to the base station in FR2. It further enables the base station of FR2 to take over a coordination role, i.e. using sidelink in FR2 in coordination with Uu interface to said second or other devices in FR2 not to interfere and perform an offloading of resources from FR1 to reduce capacity load on FR1.

The invention thus also relates to base station to implement the corresponding method. Said base station is thus adapted to perform New Radio carrier aggregation, said base station being further adapted to monitor the establishment of a sidelink for a first user device having an air interface with the said base station acting in a first range of frequency, said base station comprising:
- an analyze module to analyze neighbor cell measurements received from the first and at least another second user device,
- an evaluation module to evaluate the distance between the two user devices, said evaluation being triggered in the case the second user device is in coverage of a second base station acting in a second range of frequency, different from the first range of frequency, said second base station having a connection link with the first base station,
- a communication module adapted to:
   - send an indication to the first user device on the possibility to establish a sidelink in the second range of frequency with the second user device in the case the distance between the two user devices is within the range of a sidelink in said second range of frequency,
   - send, to the second user device, an indication on the possibility to establish a sidelink in second range of frequency with the first user device and to establish an air interface in second range of frequency with the second base station,
   - receive an indication on the establishment of this sidelink in case the sidelink in second range of frequency is established,
- a processing module to process using aggregation, flow of data on the air interface with the first base station in the first range of frequency and flow of data on connection link with the second base station, said flow of data on connection link comprising data from the first user device via the air interface of the second user device with the second base station and the sidelink of the first user device with the second user device in the second range of frequency. said processing occurring in case of reception of the indication of the establishment of a sidelink in second range of frequency.

Advantageously the base station is further adapted to perform the further features of the method implemented in a base station of the invention.

The invention also relates to a method, in a context of New Radio carrier aggregation, to establish a sidelink with a first user device having an air interface with a first base station acting in a first range of frequency, said method comprising, for a second user device having a previously established sidelink in the first range of frequency with the first user device:
- sending, using the sidelink in first range of frequency, an indication on the possibility to establish a sidelink in a second range of frequency, different from the first range of frequency, with the first user device and to establish an air interface in the second range of frequency with a second base station, said second base station having a connection link with the first base station,
- establishing a sidelink with the first user device in second range of frequency,
- establishing an air interface with the second base station in said second range of frequency,
- forwarding flow of data received from the first user device on the sidelink in second range of frequency or received from the second base station on the air interface in second range of frequency to, respectively, the second base station using the air interface in second range of frequency or to the first user device using the sidelink in second range of frequency.

The invention thus proposes a further detailed way operated from another user device that the first user device to support opening secondary link via sidelink and letting said sidelink be supervised by secondary base station adapted to act in second range of frequency. The supervision thus happens via the second device receiving information from the second base station via Uu interface. It is here noted that, in particular, knowledge of FR2 coverage of the second user device could also be gained by the first user device by the fact of retrieving said information from the sidelink the two user devices have in FR1.

The invention also relates to a user device adapted to implement this last method, said user device having a previously established sidelink in a first range of frequency with a first user device having an air interface with a first base station acting in the first range of frequency, said user device being further configured to:
- send, using the sidelink in first range of frequency, an indication on the possibility to establish a sidelink in a second range of frequency, different from the first range of frequency, with the first user device and to establish an air interface in the second range of frequency with a second base station, said second base station having a connection link with the first base station,
- establish a sidelink with the first user device in second range of frequency,
- establish an air interface with the second base station in said second range of frequency,
- forward flow of data received from the first user device on the sidelink in second range of frequency or received from the second base station on the air interface in second range of frequency to, respectively, the second base station using the air interface in second range of frequency or to the first user device using the sidelink in second range of frequency.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 illustrates schematically the use of a sidelink in Release 17;
- Figure 2 illustrates schematically the use of a sidelink in one range of frequency in Release 18;
- Figure 3 shows LTE/NR environment with small cells 5G NR in FR2; and
- Figure 4 illustrates schematically the use of a sidelink according to the invention;
- Figures 5A and 5B are flow charts of the two implementations of the invention.

### DETAILED DESCRIPTION OF EMBODIMENTS OF THE INVENTION

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the scope of the invention. It is therefore intended that the invention may not be limited to the exact form and detail shown and described herein, nor to anything less than the whole of the invention disclosed herein and as claimed hereinafter. The same elements have been designated with the same references in the different drawings. For clarity, only those elements and steps which are useful to the understanding of the present invention have been shown in the drawings and will be described.

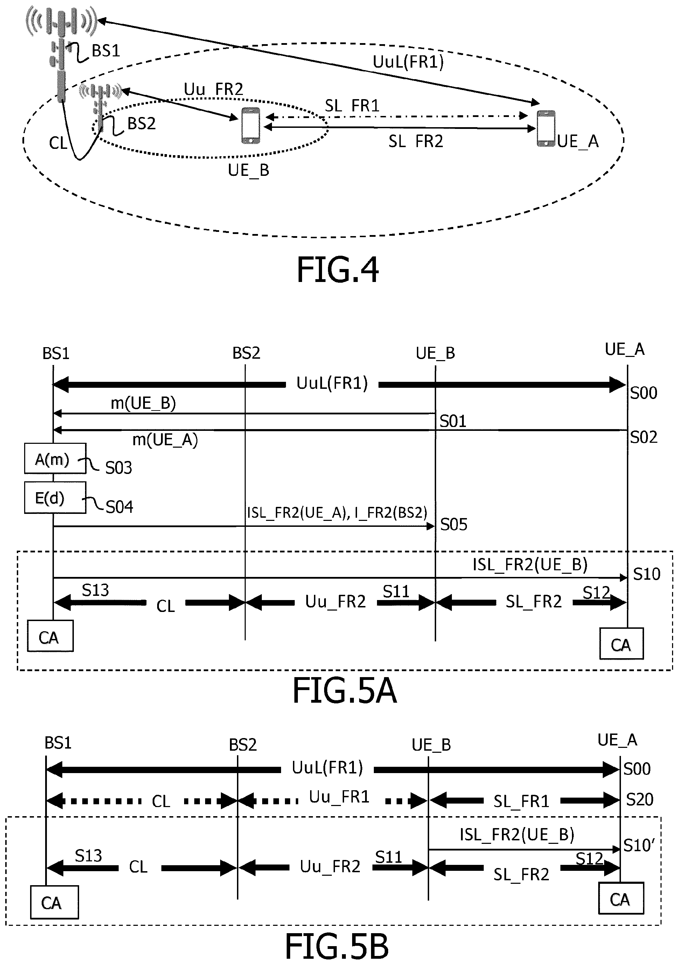

Figure 4 schematically shows the use of a sidelink according to the invention.

In the current state of the art defined by 3GPP Rel.-17, sidelink is only used as a pure coverage extension in FR1 case of network control or for direct UE to UE data exchange as shown on figure 2.

The original setup scenario of the invention is outlined in figure 4. The invention proposes means to support, from a primary Uu link UuL(FR1) of a first base station BS1 in a first range of frequency, here FR1, a secondary link/connection on a different base station BS2 involving a sidelink SL_FR2 being supervised by said second cell BS2, said sidelink SL_FR2 being in a second range of frequency, here FR2.

The invention makes use of sidelink as specified in carrier aggregation CA in FR1. Sidelink is not yet specified in FR2 and unlicensed band, but will be specified in the standard. The invention advantageously makes use of such a sidelink in FR2 or unlicensed band as it will be standardized later on.

It is here noted that the term "base station" is a generic term to designate any entity able to communicate with any user devices and with other base stations. A cell is thus related to a "base station" and a base station may consist of more than one cell, in the meaning of the invention. In relation with the distance evaluation performed between the UEs by the base station and necessary for the implementation of the invention, it is important to note that a cell may consist of several beams. Hence using the several beams and/or the distance to the base station, a distance between two UEs exchanging data with the base station can be determined. It uses signal strengths of visible beams of said base station to identify a strongest beam, distance and potentially even angel of arrival (AOA) of the signals, so that the distance between the UEs can reliably be extracted by the base station. The evaluation method may also be realized by a combination of some or all of the aforementioned values. Thus evaluation of the distances is based on devices being in certain likely adjacent beams of the base station to be in proximity and more over also using the angel of arrival (AOA) of the signal and time advance (TA) or any combination thereof.

The invention consists in an enhanced dual connectivity mode where one UU connection UuL(FR1) to a first base station BS1 is present in a first range of frequency FR1 between a first UE_A and the first base station BS1 and where another connection includes a sidelink connection SL_FR2 between first UE_A and a second UE_B and a UU link Uu_FR2 in a second range of frequency FR2 of the second UE_B to another base station BS2.

It is here noted that the invention only concerns a sidelink where the range of frequency is distinct from the first range where the Uu link UuL(FR1) occurs.

The sidelink may be done in FR1, as standardized, but in a distinct range of frequency in FR1 than the range of frequency of the first Uu link. This aspect ensures to overcome the capacity shortage which otherwise may occur in BS1 if their frequency resources in FR1 would be used for the sidelink solely in addition. As an example FR1, frequency resources in unlicensed band which are not supervised by any base station could also be used. The sidelink will however preferably comply to the throughput needs of the FR2 UU interface in FR2. The sidelink is indeed preferably established in FR2 for achieving throughput and offloading.

In parallel to the invention, and as shown with a dash dotted line, there may exist additionally an FR1 sidelink between the two UEs. In particular, such a sidelink in the first range of frequency will be necessary for the second option as exposed hereinafter.

The scenario is thus such that the first UE_A, which is in LTE, or in NR FR1, coverage only, receives information to connect to a second UE_B, respectively in an FR2 coverage area, and being able to setup an FR2 sidelink.

According to two distinct implementations, said information is either retrieved from the network, or from the sidelink second user device itself. The information indicates a future desired cross-frequency EN-DC scenario involving sidelink and UU interface in FR2.

According to the first implementation, shown on figure 5A, the indication about the sidelink in second range of frequency is received from the network.

In this option a previously air interface connection UuL(FR1) has been established in the first range of frequency in a preliminary step S01 between a first base station BS1 and the first user device UE_A. According to this option, the first base station is provided with measurement results from the first user device m(UE_A) and from the second user device m(UE_B), illustrated by two steps S01 and S02.

The measurements are then analyzed by the base station in a step S03. If it is detected that the second user device UE_B is in coverage of a second base station acting in a second range of frequency, different from the first range of frequency, said second base station having a connection link with the first base station, a step S04 of evaluation of the distance between the two user devices is performed. For the distance evaluation between the two user devices, the base station can use in various combinations the beams serving the respective UEs of a cell, i.e. strongest beam, reported signal strength of other visible beams from said base station, reporting of adjacent beams, the angel of arrival (AOA) or the timing advance of the signals, i.e. respective distance of each UE to the base station. The distance between the UEs can thus reliably be extracted by the base station. The distance evaluation method may also be realized by a single value, by any combination of some or all of the aforementioned values.

Furthermore this option thus evaluates a suitable sidelink user device by analysing the received neighbour cell measurements of UEs being within the coverage area of the first base station. Here only those having identified FR2 cell are suitable for such a scenario as being in reach for the UuFR2 link. Moreover a preference can be made for those device where the capability indicates that a device would be able to support an FR2 sidelink for capacity offloading.

In the case the distance between the two user devices is within the range of a sidelink in said second range of frequency, a step S05 of sending an indication ISL_FR2(UE_A) on the possibility to establish a sidelink in second range of frequency with the first user device and I_FR2(BS2) to establish an air interface in second range of frequency with the second base station.

In parallel, in a step S10, the base station BS1 sends to the first user an indication ISL_FR2(UE_B) on the possibility to establish a sidelink SL_FR2 in the second range of frequency with the second user device UE_B.

Then an air interface Uu_FR2 in the second range of frequency is established between the second user device UE_B and the second base station BS2 in a step S11. Also the sidelink in the second range of frequency SL_FR2 is established between the two user devices in a step S12. It needs especially to be noted here that normally step S11 is performed prior step S12, as the FR2 sidelink being in the frequency range of the second base station will be controlled resource wise by said second base station to avoid conflicts between the sidelink in FR2 and the UU interface in FR2. If ever no connection link CL was active previously between the two base stations BS1 and BS2, such a connection link CL is furthermore established, illustrated by a step S13.

This first option corresponds to the claim relative to a base station. The method of the invention, as implemented in the first user device is illustrated inside the dashed rectangular box.

As a use case of this first option, typically the first user device UE_A is aware that within the coverage area of the FR1 base station, whether it is LTE or NR, there is at least one NR base station of FR2 present. This can be seen by SIB messages, typically SIB24 for NR standalone, in case of a momentary serving LTE base station or by NR neighbour cell indication in case of an NR serving cell in FR1. However said NR FR2 cells are out of reach or not suited for the current UE to setup a air interface Uu connection for achieving higher throughput.

Meanwhile, the network knows, especially if both base stations are collocated, i.e. in the same cabinet, which user devices are currently connected to the second base station by use of FR2 or at least it knows which UEs have successfully reported on having detected base station in FR2. Especially signal strength with which a specific beam of a cell of the second base station was reported, can be used. Furthermore the base station can know the distance of locally positioned UEs relative to the first device UE_A. Hence it can evaluate which device would be best suited for providing a sidelink connection to the first device UE_A and at the same time having a Uu interface to the FR2 base station. It means that these both evaluated parameters need to be balanced to have a balanced throughput via sidelink and Uu interface for transporting the data from device UE_A to the base station in FR2.

Hence the base station can assist in indication which devices would be better or worse to setup a sidelink with a second user device UE_B for achieving with their help a sidelink UU FR2 connection for the first user device UE_A to increase the throughput. The base station thus evaluates the device which has best combination in sidelink and in UU, both sidelink and air interface Uu needing to fit/correspond to each other to find the right balance to serve the connectivity needs.

Based on the solution of the invention, the base station has the option to balance the sidelinks with respect to the QoS needs of the requested connection. Hence the network can provide corresponding indication especially in a separate part of the device to device resource pool so that these devices can setup connection via sidelink. It means that, once the sidelink established, the first user device UE_A can provide data via sidelink in second range of frequency, if under network control of the FR1 base station in FR1 and hence increase throughput via said sidelink and Uu on FR2.

To really achieve an offloading or significant resource saving, the sidelink needs to be established in a different frequency range as the first base station BS1 is operating in. This enables not to be restricted to the same resources/resource sharing with the maintained UU interface in FR1 to the first base station BS1. Preferably a sidelink in FR2 should be opened i.e. said sidelink under control of the base station from FR2 being able to use its FR2 resources for said sidelink to increase the throughput.

Thus, in this option, the base station acting in first range of frequency FR1, assists in identifying the corresponding UE to setup the sidelink. Then depending on capability, an additional FR2 sidelink is setup under the control of base station acting in FR2 to avoid resource conflict on Uu and sidelink interface. Thus the Uu interface of the second user device UE_B is setup to the base station FR2 which is anyway needed for transporting the data to the FR2 base station BS2. After UE_A has established a device to device connection with UE_B, the cross-FR EN_DC scenario involves sidelink. The FR1 Uu link is the link with the primary context and the FR2 sidelink is a secondary link, meaning that in case FR2/sidelink or Uu breaks, main link remains.

As illustrated on figure 5B, in the second implementation, in addition to the FR1 Uu link between the base station BS1 and the first user device UE_A, the two user devices UE_A and UE_B have previously a sidelink connectivity on FR1 established in in a preliminary step S20. Thus, the second device UE_B can itself send an indication ISL_FR2(UE_B) about its capability to setup an FR2 sidelink in addition or in replacement in a step S10'.

Subsequently, an air interface Uu in FR2 is open in a step S11, the sidelink in FR2 is open in a step S12, based on resources indicated in the air interface in FR2, and, if ever no connection link CL between the two base stations BS1 and BS2 was not yet established, such a connection link CL is established in a step S13.

Furthermore, if either of the devices is in FR2 base station coverage, said FR2 coverage is available and can furthermore be indicated. In case the first user device UE_A wants to increase its throughput beyond the throughput supported or excepted by the base station in FR1, an additional request via sidelink in FR1 can be sent, to retrieve which second user device UE_B is in FR2 coverage and has FR2 capability to setup an FR2 sidelink and FR2 Uu interface.

As the second device UE_B knows which FR2 base station BS2 it will connect to, the corresponding cell identity is advantageously indicated to the serving base station BS1 working in FR1 so that this base station BS2 can setup the corresponding network configuration i.e. accumulating the traffic load and regarding said FR2-sidelink and FR2 Uu link as secondary link. Also the second device UE_B can have its main connection to the base station in FR1 setting up in addition in NR carrier aggregation a second UU interface to the second base station BS2 and receiving via said interface the resource control for the sidelink to be established in FR2 between the two devices.

The invention thus proposes a capability exchange regarding sidelink of a second user device in FR2 via a sidelink established in FR1 frequency range or directly via an existing UU interface in FR1. Besides the capability itself on FR2 frequency range, also frequency bands may be indicated for which this is feasible. Such indication may also include unlicensed bands. Besides the capability, the second user device UE_B may additionally or separately also indicate via the sidelink in FR1 for which FR2 frequencies it can measure second base stations for setting up a Uu interface. Thus neighbor cell results related to measurement tasks or indications provided by an FR2 or FR1 base station can be provided via FR1 sidelink at least for FR2 cells where successful FR2 Uu link is possible.

In case that the involved base station BS2 in FR2 does not support for that scenario-advised sidelink, i.e. sidelink under control of the base station BS2, an unlicensed band may be used to setup said sidelink between both user devices UE_A and UE_B. Then the FR2 Uu interface is used for further data transport. Hence also indicating of sidelink support for unlicensed bands is a capability to be indicated via an FR1 sidelink.

This invention is not treating related physical layer aspects on beam synchronization/management or content when setting up cross-frequency range (cross-FR) UU and sidelink involving links.

The present invention addresses means related to signaling and identification i.e. layer2/layer3 aspects. For layer1 aspects of FR1/FR2 Uu sidelink scenarios and additional invention on physical layer aspects i.e. beam management and recognition may be drafted later.

It will be useful to standardize the method of the invention as it involves different devices and different networks/base stations.

In the above detailed description, reference is made to the accompanying drawings that show, by way of illustration, specific embodiments in which the invention may be practiced. These embodiments are described in sufficient detail to enable those skilled in the art to practice the invention. The above detailed description is, therefore, not to be taken in a limiting sense, and the scope of the present invention is defined only by the appended claims, appropriately interpreted.

It is here noted that the second base station does not specifically need to be a 3GPP device. Such a characteristic is not necessary for a device to be able to provide connectivity in the second range of frequency FR2 or unlicensed frequency range. In such a scenario, a sidelink is setup from a first device being connected to a first base station, in a first frequency range, where the used frequency range for the sidelink to the second device differs from the frequency range being used to connect the first device to the first base station. Said second frequency may not even be used by any other base station in proximity. It can thus be any unused or unlicensed frequency. Said second device transfers the data received via said sidelink from the first device to a network entry point which can be of any non-3GPP technology, typically including WIFI, WLAN or others. The data are then routed in the network by indicating the IP address of the first base station and including a context identifier, which can map these data to the context exchanged between the first device and the first base station.

## Claims

1. Method, in a context of New Radio Link carrier aggregation, to establish a sidelink for a first user device having an air interface with a first base station acting in a first range of frequency and being adapted to establish sidelink in a second range of frequency, different from the first range of frequency, said first base station having at least a connection link with a second base station adapted to act in the second range of frequency,
said method comprising, for the first user device:
- receiving an indication on the possibility to establish a sidelink in the second range of frequency with a second user device being available to provide a sidelink in the second range of frequency while besides connecting to the second base station,
- establish a sidelink with the second user device in the second range of frequency,
- processing, using aggregation, flow of data on the air interface with the first base station in the first range of frequency and flow of data on the sidelink with the second user device in the second range of frequency.

2. Method according to claim 1, wherein the first range of frequency is within the FR1 range as defined in New Radio.

3. Method according to one of preceding claims, wherein the second range of frequency is a range of frequency outside the FR1 range as defined in New Radio.

4. Method according to one of preceding claims, wherein the second range of frequency is within the FR2 range as defined in New Radio.

5. Method according to one of the preceding claims, wherein the first range of frequency is of licensed band and the second range of frequency is of unlicensed band.

6. Method according to one of the preceding claims, wherein the indication is received in the information signaled by the first base station.

7. Method according to one of the claims 1 to 5, wherein, the two user devices having a previously established sidelink in the first range of frequency, the indication is received via this sidelink in the first range of frequency.

8. User device adapted to have an air interface with a first base station acting in a first range of frequency and having at least a connection link with a second base station adapted to act in the second range of frequency said user device being adapted to establish a sidelink in a second range of frequency, different from the first range of frequency in a context of New Radio Link carrier aggregation, said user device being further configured to:
- receive an indication on the possibility to establish a sidelink in the second range of frequency with a second user device being available to provide a sidelink in the second range of frequency while besides connecting to the second base station,
- establish a sidelink with the second user device in the second range of frequency,
- processing, using aggregation, flow of data on the air interface with the first base station in the first range of frequency and flow of data on the sidelink with the second user device in the second range of frequency.

9. Method, in a context of New Radio carrier aggregation, to establish a sidelink with a first user device having an air interface with a first base station acting in a first range of frequency, said method comprising, for the first base station:
- analyzing neighbor cell measurements received from the first and at least another second user device,
- in the case the second user device is in coverage of a second base station acting in a second range of frequency, different from the first range of frequency, said second base station having a connection link with the first base station, evaluating the distance between the two user devices,
- in the case the distance between the two user devices is within the range of a sidelink in said second range of frequency:
- sending an indication to the first user device on the possibility to establish a sidelink in the second range of frequency with the second user device,
- sending, to the second user device, an indication on the possibility to establish a sidelink in second range of frequency with the first user device and to establish an air interface in second range of frequency with the second base station,
- in case the sidelink in second range of frequency is established, receiving an indication on the establishment of this sidelink,
- in case of reception of such an indication, processing, using aggregation, flow of data on the air interface with the first base station in the first range of frequency and flow of data on connection link with the second base station, said flow of data on connection link comprising data from the first user device via the air interface of the second user device with the second base station and the sidelink of the first user device with the second user device in the second range of frequency.

10. Method according to claim 9, wherein the step of evaluating the distance between the two user devices uses any combinations of the parameters hereafter:
- cell identifier,
- reported beam identifier,
- reported strongest beam of a cell,
- set of reported beams of a cell above a certain threshold,
- angle of arrival of received signal from user device,
- timing advance used for communication with each device.

11. Method according to any one of claims 9 and 10, wherein, the steps of analyzing neighbor cell measurements and of evaluating distances being performed for a bunch of local user devices, the method includes the step of determining at least one best second user device with which to setup a sidelink in the second range of frequency for achieving a connection using said sidelink and an air interface of this second user device in the second range of frequency for the first user device.

12. Base station adapted to perform New Radio carrier aggregation, said base station being further adapted to monitor the establishment of a sidelink for a first user device having an air interface with the said base station acting in a first range of frequency, said base station comprising:
- an analyze module to analyze neighbor cell measurements received from the first and at least another second user device,
- an evaluation module to evaluate the distance between the two user devices, said evaluation being triggered in the case the second user device is in coverage of a second base station acting in a second range of frequency, different from the first range of frequency, said second base station having a connection link with the first base station,
- a communication module adapted to:
- send an indication to the first user device on the possibility to establish a sidelink in the second range of frequency with the second user device in the case the distance between the two user devices is within the range of a sidelink in said second range of frequency,
- send, to the second user device, an indication on the possibility to establish a sidelink in second range of frequency with the first user device and to establish an air interface in second range of frequency with the second base station,
- receive an indication on the establishment of this sidelink in case the sidelink in second range of frequency is established,
- a processing module to process, using aggregation, flow of data on the air interface with the first base station in the first range of frequency and flow of data on connection link with the second base station, said flow of data on connection link comprising data from the first user device via the air interface of the second user device with the second base station and the sidelink of the first user device with the second user device in the second range of frequency.

13. Base station according to claim 12, wherein the evaluation module to evaluate the distance between the two user devices uses any combinations of the parameters hereafter:
- cell identifier,
- reported beam identifier,
- reported strongest beam of a cell,
- set of reported beams of a cell above a certain threshold,
- angle of arrival of received signal from user device,
- timing advance used for communication with each device.

14. A base station according to any one of claims 12 and 13, wherein, while the analyze module is configured to analyse neighbor cell measurements for a bunch of local user devices, the evaluation module is further configured to determine at least one best second user device with which to setup a sidelink in the second range of frequency for achieving a connection using said sidelink and an air interface of this second user device in the second range of frequency for the first user device.

15. Method, in a context of New Radio carrier aggregation, to establish a sidelink with a first user device having an air interface with a first base station acting in a first range of frequency, said method comprising, for a second user device having a previously established sidelink in the first range of frequency with the first user device:
- sending, using the sidelink in first range of frequency, an indication on the possibility to establish a sidelink in a second range of frequency, different from the first range of frequency, with the first user device and to establish an air interface in the second range of frequency with a second base station, said second base station having a connection link with the first base station,
- establishing a sidelink with the first user device in second range of frequency,
- establishing an air interface with the second base station in said second range of frequency,
- forwarding flow of data received from the first user device on the sidelink in second range of frequency or received from the second base station on the air interface in second range of frequency to, respectively, the second base station using the air interface in second range of frequency or to the first user device using the sidelink in second range of frequency.

16. User device having a previously established sidelink in a first range of frequency with a first user device having an air interface with a first base station acting in the first range of frequency, said user device being further configured to:
- send, using the sidelink in first range of frequency, an indication on the possibility to establish a sidelink in a second range of frequency, different from the first range of frequency, with the first user device and to establish an air interface in the second range of frequency with a second base station, said second base station having a connection link with the first base station,
- establish a sidelink with the first user device in second range of frequency,
- establish an air interface with the second base station in said second range of frequency,
- forward flow of data received from the first user device on the sidelink in second range of frequency or received from the second base station on the air interface in second range of frequency to, respectively, the second base station using the air interface in second range of frequency or to the first user device using the sidelink in second range of frequency.
